(19) **Europäisches Patentamt / European Patent Office / Office européen des brevets**

(11) **EP 2 677 462 B1**

(12) **EUROPEAN PATENT SPECIFICATION**

(45) Date of publication and mention of the grant of the patent:
**30.05.2018 Bulletin 2018/22**

(51) Int Cl.:
***G06T 15/00*** *(2011.01)*

(21) Application number: **13165616.7**

(22) Date of filing: **26.04.2013**

(54) **Method and apparatus for segmenting object area**

Verfahren und Vorrichtung zur Segmentierung eines Objektbereichs

Procédé et appareil de segmentation de zone d'objet

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012 CN 201210147434**

(43) Date of publication of application:
**25.12.2013 Bulletin 2013/52**

(73) Proprietor: **Ricoh Company, Ltd.**
**Tokyo 143-8555 (JP)**

(72) Inventors:
• **Lu, Yaojie**
  **Haidian District Beijing 100044 (CN)**
• **You, Ganmei**
  **Haidian District Beijing 100044 (CN)**
• **Shi, Zhongchao**
  **Haidian District Beijing 100044 (CN)**

• **Wang, Gang**
  **Haidian District Beijing 100044 (CN)**

(74) Representative: **Round, Edward Mark et al**
**Marks & Clerk LLP**
**90 Long Acre**
**London WC2E 9RA (GB)**

(56) References cited:
• **BLEYER M ET AL: "A layered stereo algorithm using image segmentation and global visibility constraints", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 5, 24 October 2004 (2004-10-24), pages 2997-3000, XP010786427, DOI: 10.1109/ICIP.2004.1421743 ISBN: 978-0-7803-8554-2**

EP 2 677 462 B1

**Description**

**BACKGROUND OF THE INVENTION**

**1. Field of the Invention**

The present invention generally relates to the image processing field, and specifically, a method and an apparatus for segmenting an object area.

**2. Description of the Related Art**

Object segmentation processing is one of the important preprocessings of object recognition and a lot of image processings. An accurate object segmentation may be a great help to subsequent image understanding and processing. For example, in the widely diffused driving assistance system, it is necessary to segment and recognize objects such as pedestrian, vehicle and road sign, and object areas for the road environment. Besides, in the office environment, it may be necessary to segment and recognize objects such as office furniture and computer equipment, and object areas.

The objects and object areas mentioned in the present invention include all objects and obstacles that the characters are not limited. In general, object segmentation includes segmenting the object from a scene.

At present some methods of segmenting or detecting the object are provided. In U.S. Patent No. 7,046,822, a method of detecting objects within a range of a road vehicle is disclosed. According to this method, three-dimensional objects are determined by features with similar distance values and flat objects are determined by features with similar height values. However, in this method, near objects cannot be segmented or detected.

In Patent Application Publication No. WO2009/013636A2, an automatic method of segmenting an object boundary, that uses two step segmentations, is disclosed. In the first step, the image is filtered to identify object edge candidates. In the second step, most of the false edges are removed, the image is scanned along radial lines and only the first-detected boundary candidates are kept; some remaining false edge pixels are removed.by fitting a polynomial to the image points and the points with the maximum distance are removed from the fit, so that the resulting candidate edges form an initial model that is then deformed using the Discrete Dynamic Contour (DDC) model to obtain a closed contour of the object boundary. However, in this method, the distance relationship between the objects within the scene is not considered and the distance information is not used, so that the detection accuracy of this method is low.

In actual detection conditions, a lot of objects may be connected together or be close to each other. For example, image characteristics of several people who walk abreast, even several connected objects (such as pedestrians) look like the shape of a car. Moreover, it is possible that several objects at different distance seem to partially overlap from the standpoint of a viewer.

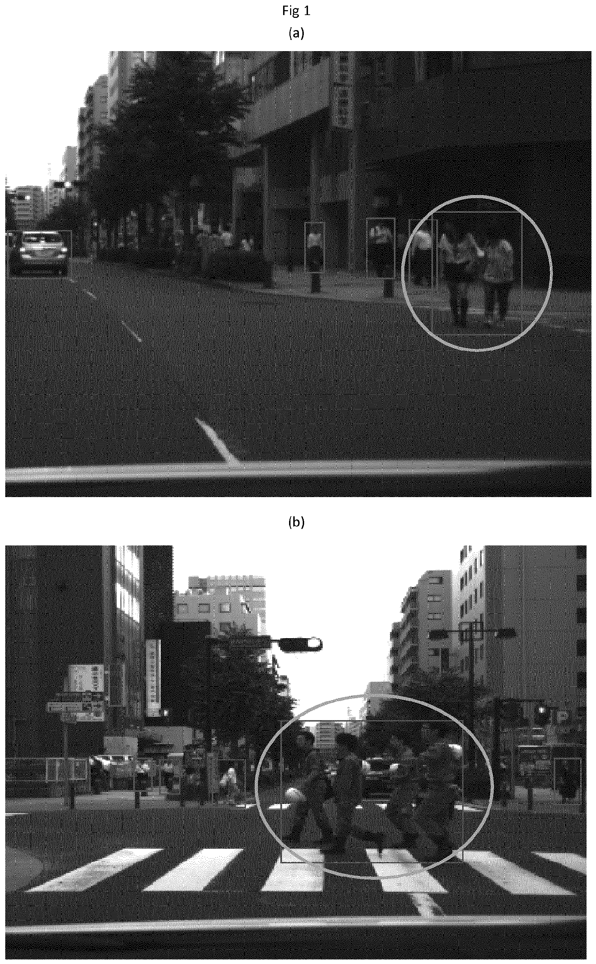

For example, FIGs. 1(a) and 1(b) illustrate a scene with connected objects. The oval-shaped box of FIG. 1(a) illustrates a case in which two objects are connected, while the oval-shaped box of FIG. 1(b) illustrates a case in which plural objects are connected. With respect to these cases, it is difficult to segment the connected objects for the existing method of recognition or segmentation, therefore, the detection result is inaccurate.

In addition, in the prior method of object segmentation, grey-scale image or color image is usually used to segment the object, therefore the accuracy of object segmentation is also limited by the complicated visual characteristic. BLEYER M ET AL: "A layered stereo algorithm using image segmentation and global visibility constraints". IMAGE PROCESSING, 2004. ICIP '04. 2004 INTERNATIONAL CONFERENCE ON SINGAPORE 24-27 OCT.2004. PISCATAWAY, NJ, USA, IEEE, vol. 5, 24 October 2004 (2004-10-24), pages 2997-3000, XP010786427,DOI: 10.1109/ICIP. 2004.1421743ISBN: 978-0-7803-854-2 discloses a method for segmenting an object area, comprising:

        obtaining a disparity map of a scene with an object;
        obtaining one or more candidate object areas with an object outline from the disparity map;
        obtaining a disparity range of the object within each of the candidate object areas;
        obtaining object segmentation areas for segmenting the objects within each of the candidate object areas, based on points within the candidate object area; and
        segmenting the candidate object areas by the object segmentation areas and obtaining a segmentation result of the object area.

The invention is in the method of Claim 1 and the apparatus of Claim 6. area consisting of the points within the candidate object area that have the disparity value less than the minimum value of the disparity range of the object within the candidate object area as the object segmentation area.

The step of obtaining the object segmentation areas may further comprise a step of detecting whether points within the candidate object area that do not have a disparity value are adjacent to a point within the object segmentation area in vertical direction or not, and putting the points into the object segmentation area if the points are adjacent to the point within the object segmentation area.

The step of obtaining the object segmentation areas may further comprise a step of detecting whether points within the candidate object area that have a disparity value greater than a maximum value of the disparity range of the object are adjacent to a point within the object segmentation area in vertical direction or not, and putting the points into the object segmentation area if the points are adjacent to the point within the object segmentation area.

The step of segmenting the candidate object areas by the object segmentation areas may comprise: a step of obtaining an estimation object area within the candidate object area, based on points within the candidate object area that have a disparity value within the disparity range; and a step of segmenting the estimation object area by the object segmentation area.

The step of obtaining the estimation object area may comprise a step of using an area consisting of points within the candidate object area that have a disparity value within the disparity range as the estimation object area.

The step of obtaining the estimation object area may further comprises a step of detecting whether points within the candidate object area that do not have a disparity value are adjacent to a point within the estimation object area or not, and putting the points into the estimation object area if the points are adjacent to the point within the estimation object area.

The step of obtaining the estimation object area may further comprises a step of detecting whether points within the candidate object area that have a disparity value greater than a maximum value of the disparity range of the object are adjacent to a point within the estimation object area or not, and putting the points into the estimation object area if the points are adjacent to the point within the estimation object area.

The step of segmenting the estimation object area by the object segmentation area may comprise: (a) using a connected area obtained by removing the object segmentation area from the estimation object area as a new estimation object area; (b) obtaining top edge position information of the new estimation object area, and obtaining a positional wave trough point; (c) detecting whether the height of the wave trough point is less than a predetermined threshold or not, and if the height is less than the predetermined threshold, segmenting the new estimation object area into two areas based on the wave trough point and using the two areas as new estimation object areas; and (d) repeating the above steps (b) and (c) with respect to the obtained all new estimation object areas, until there is no more segmentation.

The predetermined threshold is an absolute threshold or a relative threshold computed from the top edge position information.

According to another aspect of the present

According to the method for segmenting the object area, distance information of the objects and hiding relationships between the objects reflected in the disparity map are considered, and the information of far objects is used as a cut standard of the segmentation; therefore, the objects that are connected together or close to each other can be segmented, an accurate segmentation can be realized, and a good anti-noise capability can be realized.

Furthermore, according to the present invention, the partially hidden objects can also be segmented well by processing near objects.

## BRIEF DESCRIPTION OF THE DRAWINGS

FIGs. 1(a) and 1(b) are schematic drawings illustrating cases in which two or more connected objects exist in a scene to be detected;

FIG. 2 is an overall flowchart illustrating the method of segmenting the object area according to the embodiment of the present invention;

FIG. 3 is a flowchart illustrating the method of obtaining the object segmentation area of step S240 of FIG. 2 according to the embodiment of the present invention;

FIG. 4 is a flowchart illustrating the method of segmenting the candidate object area by the object segmentation area of step S250 of FIG. 2 according to the embodiment of the present invention;

FIG. 5 is a flowchart illustrating the method of obtaining the estimation object area of step S410 of the method according to the embodiment of the present invention;

FIGs. 6(a) and 6(b) are schematic drawings illustrating a result of object area segmentation obtained by the method of segmenting the object area according to the embodiment of the present invention;

FIG. 7 is a flowchart illustrating a method of further optimizing the result of segmentation according to the embodiment of the present invention; and

FIG. 8 is a block diagram illustrating an object area segmenting apparatus 800 according to the embodiment of the present invention.

## DETAILED DESCRIPTION OF THE PREFERRED EMBODIMENTS

In the following, embodiments of the present invention are described with reference to the accompanying drawings, so as to facilitate the understanding of the present invention.

The embodiments of the present invention will be described in the following order:

<1. Invention idea summary and essential concepts>
<2. Embodiment>

      <2.1. Flow of object area segmentation>
      <2.2. Object segmentation area obtainment>
      <2.3. Segmenting by object segmentation area>
      <2.4. Further optimization of segmentation result>
      <2.5. Object segmenting apparatus>

    <3. Summary>

<1. Invention idea summary and essential concepts>

First, an invention idea summary will be introduced as follows, so as to facilitate the understanding of the present invention. In a scene to be detected, a case in which plural objects to be detected are connected or close to each other and a case in which a far object is partially hidden by a near object often occur. Because the objects are not transparent in most cases, through an object we cannot see an object behind it; so that, if we see a far object, the sides of the far object might belong to two different corresponding objects in the scene. For this reason, it is considered that distance information within the disparity map is used to segment the object in the present invention.

Next, essential concepts will be introduced as follows, so as to facilitate the understanding of the present invention.

Disparity indicates an angle made by two straight lines that are drawn from opposite ends of a base line to a distant object. That is to say, it means a direction difference generated by looking at the same object from two points having a certain separation distance. The angle that is generated by looking at the two points from the object is called a disparity angle of the two points, and the distance between the two points is called a base line. A distance between the object and an observer can be calculated as long as the disparity angle and length of the base line are known.

A disparity map is an image that is based on a reference image, the size of the disparity is the size of the reference image, and an element value of the disparity map is a disparity value. The disparity map includes distance information of a scene. The disparity map may be calculated from left and right images picked up by a binocular camera or calculated from a depth map of a stereogram. The method of obtaining the disparity map of the scene is known in prior art.

<2. Embodiment>

<2.1. Flow of object area segmentation>

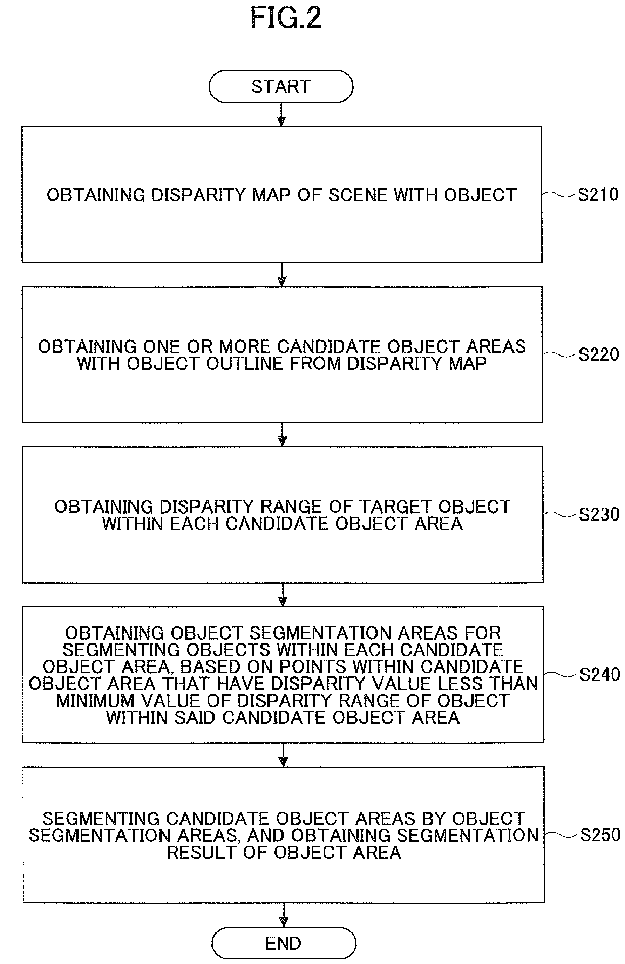

FIG. 2 is an overall flowchart illustrating the method of segmenting the object area according to the embodiment of the present invention.

As illustrated in FIG. 2, in step S210, a disparity map of a scene with an object is obtained. As described above, the disparity map with the object may be obtained by picking-up by a binocular camera, a multi-camera, or a stereoscope camera; or the disparity map may be obtained from a depth map that is obtained from a stereo image. The method of obtaining the disparity map of the scene is known in prior art.

In step S220, one or more candidate object areas with an object outline are obtained from the disparity map. With respect to the disparity map obtained in step S220, the segmentation result of the candidate object areas (PRES) may be obtained by any method of object segmentation, such as the following equation (1).

$$PRES = \{obj_1, obj_2 \dots ojb_n\} \tag{1}$$

Where $obj_i$ represents the candidate object areas after segmenting.

After the candidate object areas are obtained, in step S230, a disparity range of a target object within each of the candidate object areas is obtained. As illustrated in the following equation (2), each candidate object area after segmenting includes the following information: object area information (area$_i$) and an object disparity range (disprange$_i$).

$$obj_i = (area_i, disprange_i) \qquad (2)$$

With respect to the object area information area$_i$, in general in the candidate segmentation, because a general outline of the target object is an irregular shape, a circumscribed rectangle including the general outline may be used as the object area information of the candidate segmentation. The areas of rectangular boxes as illustrated in FIGs. 1(a) and (b) may be regarded as plural candidate object areas. It should be noted that the shape of the candidate object area is not limited to the rectangle, but may be round, oval, etc.

With respect to the object disparity range disprange$_i$, in general, 90% of the points within the general outline of the object of the corresponding area$_i$ may be used as effective points to calculate the disparity range disprange$_i$ of the target object within the area$_i$. The disparity range is an interval value, such as [min$_i$, max$_i$), where min$_i$ is a minimum disparity value of the target object within the candidate object area area$_i$ and max$_i$ is a maximum disparity value of the target object within the candidate object area area$_i$, accordingly the disparity range represents the distance and the thickness of the target object.

It should be noted that the points for calculating the disparity range are not limited to the above 90% of the points, but it may be 95%, etc. Alternatively, the disparity range of the object may be calculated by another method, such as a method of UV disparity map. For example, a document "Stereovision-Based Object Segmentation for Automotive Applications" (Yingping Huang, et al., EURASIP Journal on Applied Signal Processing 2005:14, pages 2322-2329) discloses a method for obtaining the above object area information (area$_i$) and the object disparity range (disprange$_i$)by the UV disparity map.

It should be noted that besides the existing segmentation method for obtaining one or more candidate object areas, the one or more candidate object areas may be specified from the disparity map by a user and the object area information (area$_i$) and the object disparity range (disprange$_i$)of each area may be obtained by the existing technology method.

In step S240, the object segmentation areas for segmenting the objects within each of the candidate object areas are obtained based on points within the candidate object area that have a disparity value less than a minimum value of the disparity range of the object within the candidate object area.

With respect to the each candidate object area obtained in step S220, because the candidate object areas are obtained based on the circumscribed rectangles of the general outlines of the objects as described above, the candidate object areas may include points that do not belong in the target object within the candidate object area but are within the candidate. Considering the disparity values of the points with the disparity map can reflect characteristics of the distance information, there might be the following four types of points in the candidate object areas area$_i$:

C1: points with a disparity value within the disparity range [min$_i$, max$_i$) of the target object of the area$_i$, which represents the points might be the points of the target object;

C2: points with a disparity value less than the minimum disparity value min$_i$ of the target object, which represents the points might be the points of a farther object;

C3: points with a disparity value greater than the maximum disparity value max$_i$ of the target object, which represents the points might be the points of a nearer object;

C4: points without a disparity value, which represents the values of the points might be the same values as adjacent points. In general, there are points without a disparity value for some reasons, for example, the defect of a camera for picking up the image, or a reason that the object which the points belong to does not have texture information and is reflected as black.

As described in the above invention idea summary, the objects are not transparent in most cases and through an object we cannot see an object behind it; so that, if the candidate object area includes points that belong to a farther object (points of type C2), two sides of the farther points might be belong to two different object. Therefore, the farther points may be used to segment further the candidate object area as segmentation points.

Therefore, with respect to the candidate object area obtained in step S220, the object segmentation areas for segmenting the objects within the candidate object areas may be obtained based on the points within the candidate object area that have the disparity value less than the minimum value of the disparity range of the object within the candidate object area (points of type C2).

In step S250, the candidate object areas are segmented by the object segmentation areas and a segmentation result of the object area is obtained. Accordingly, points that do not belong to the target object can be removed from the candidate object area and objects that are connected together or close to each other can be segmented.

<2.2. Object segmentation area obtainment>

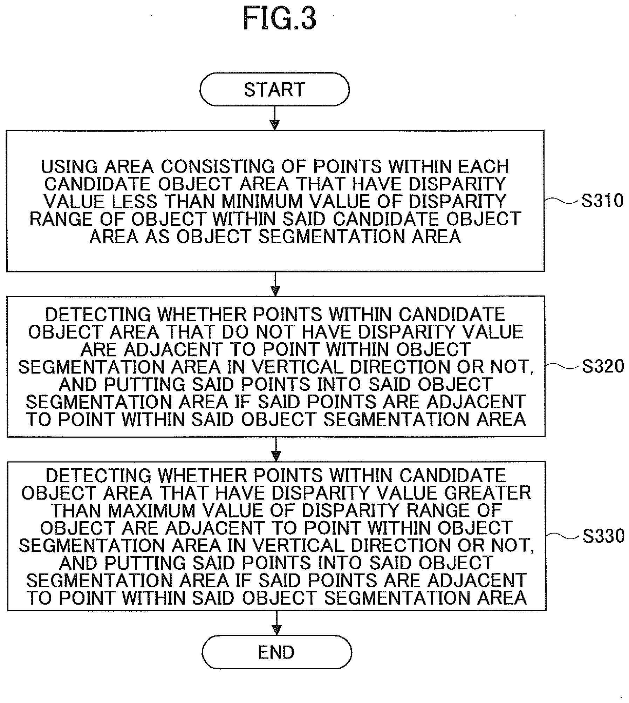

FIG. 3 is a flowchart illustrating the method of obtaining the object segmentation area of step S240 of FIG. 2 according to the embodiment of the present invention.

As illustrated in FIG. 3, in step S310, an area consisting of the points within the candidate object area that have the disparity value less than the minimum value of the disparity range of the object within the candidate object area is used as the object segmentation area.

Alternatively, the method may comprise step S320. In step S320, points within the candidate object area that do not have a disparity value are detected whether the points are adjacent to a point within the object segmentation area in vertical direction or not, and the points are put into the object segmentation area if the points are adjacent to the point within the object segmentation area.

The reason is that: with respect to the points within the candidate object area that do not have a disparity value, namely the points with an unknown distance, if the points are connected to a point with a disparity value, the distance of the points might be the same as the disparity value of the connected point. So that, if the points without a disparity value are adjacent to the point within the object segmentation area in vertical direction, the points might belong to the farther object; accordingly, the points are put into the object segmentation area.

The reason for considering only the adjacent points in vertical direction and not the adjacent points in horizontal direction is that: in general, objects (such as pedestrians and cars) are not stacked vertically but are adjacent horizontally (in horizontal direction). Therefore, it is necessary to segment in vertical direction only, not in the horizontal direction.

The method for detecting whether detection points are adjacent in vertical direction or not, may be realized by a 2-connected method of detecting coordinate value of each point in the prior art.

Alternatively, the method may comprise step S330. In step S330, points within the candidate object area that have a disparity value greater than the maximum value $max_i$ of the disparity range of the object are detected whether the points are adjacent to a point within the object segmentation area in vertical direction or not, and the points are put into the object segmentation area if the points are adjacent to the point within the object segmentation area.

The reason is that: with respect to the points within the candidate object area that have a disparity value greater than the maximum disparity value $max_i$ of the disparity range of the target object (the points belonging to type C3), they belong to the points of the nearer object as described above and might hide the further object; accordingly the distances of points of the hidden part are also unknown. So that, if the points are adjacent to the point within the object segmentation area in vertical direction, points hidden by the points have the same disparity value as the adjacent point, that is to say, the points hidden by the points might also belong to the farther object; accordingly, the points are put into the object segmentation area.

Therefore, in step S250 of the method, the candidate object areas are segmented by the object segmentation areas obtained in step S330, and an accurate object area segmentation can be realized.

It should be noted that the object segmentation areas obtained only in step S310 (namely the areas consisting of the points within the candidate object area that have the disparity value less than the minimum value of the disparity range of the object within the candidate object area) may also be directly used as the object segmentation areas obtained in step S240 of the method. In this case, a further segmentation of the candidate object area can be realized by using the information of the further object, and objects that might be connected can be segmented.

<2.3. Segmenting by object segmentation area>

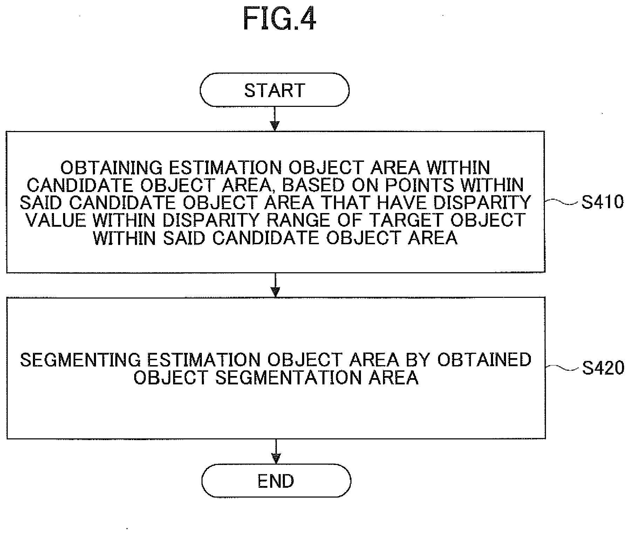

FIG. 4 is a flowchart illustrating the method of segmenting the candidate object area by the object segmentation area of step S250 of FIG.2 according to the embodiment of the present invention.

As illustrated in FIG. 4, in step S410, an estimation object area within the candidate object area is obtained based on points within the candidate object area that have a disparity value within the disparity range of a target object of the candidate object area.

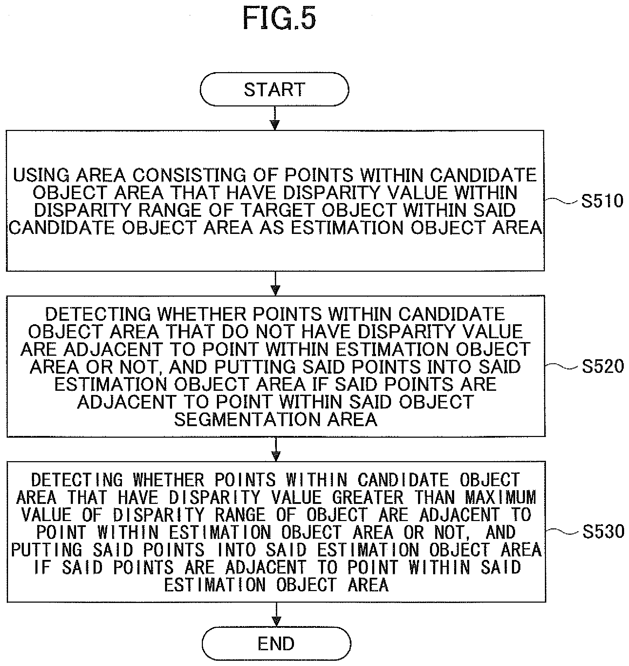

As described above, because the points with a disparity value within the disparity range of the target object might belong to the target object, the estimation object area with a highest likelihood that the target object might exist may be obtained from the candidate object area, based on these points. An embodiment of the estimation object area will be described later in detail with reference to FIG. 5.

The method also comprises step S420. In step S420, the estimation object area is segmented by the obtained object segmentation area. Accordingly, a further segmentation of the candidate object area can be realized by using the information of the further object, and objects that might be connected can be segmented.

FIG. 5 is a flowchart illustrating the method of obtaining the estimation object area of step S410 of the method according to the embodiment of the present invention.

As illustrated in FIG. 5, in step S510, an area consisting of points within the candidate object area that have a disparity value within the disparity range of the target object within the candidate object area (points of type C1) is used as the estimation object area.

Alternatively, the method may comprise step S520. In step S520, points within the candidate object area that do not have a disparity value are detected whether the points are adjacent to a point within the estimation object area or not, and the points are put into the estimation object area if the points are adjacent to the point within the estimation object area.

As described above, with respect to the points within the candidate object area that do not have a disparity value (points of type C4), namely the points with an unknown distance, if the points are adjacent to a point with a disparity value, the distance of the points might be the same as the disparity value of the adjacent point. So that, if the points without a disparity value are adjacent to the point within the estimation object area, the points might belong to the target object; accordingly, the points are put into the estimation object area.

With respect to the detection of step S520, because the points without a disparity value might be adjacent to a point within the estimation area in vertical or horizontal direction, an existing 4-connected method may be used to detect whether the points are adjacent to the point in horizontal or vertical direction. Alternatively, an 8-connected method may also be used to detect in eight possible directions more accurately.

Alternatively, the method may comprise step S530. In step S530, points within the candidate object area that have a disparity value greater than the maximum value of the disparity range of the object are detected whether the points are adjacent to a point within the estimation object area or not, and the points are put into the estimation object area if the points are adjacent to the point within the estimation object area.

As described above, with respect to the points within the candidate object area that have a disparity value greater than the maximum disparity value $max_i$ of the disparity range of the target object (the points belonging to type C3), they belong to the points of the nearer object and might hide the target object; accordingly the distances of points of the hidden part are also unknown. So that, if the points are adjacent to the point within the estimation object area, points hidden by the points have the same disparity value as the adjacent point, that is to say, the points hidden by the points might also belong to the target object; accordingly, the points are put into the estimation object area.

Accordingly, the estimation object area with a highest likelihood that the target object might exist is obtained from the candidate object area. The object area segmented accurately can be obtained by removing the obtained object segmentation area from the estimation object area. Therefore, a further segmentation of the candidate object area can be realized by using the information of the further object, and objects that might be adjacent to each other can be segmented.

It should be noted that the estimation object areas obtained only in step S510 (namely the areas consisting of the points within the candidate object area that have the disparity value within the disparity range of the target object within the candidate object area) may also be directly used as the estimation object areas obtained in step S410 of the method. In this case, a further segmentation of the candidate object area can also be realized by using the information of the further object, by removing the obtained object segmentation area from the estimation object area, and objects that might be adjacent to each other can be segmented.

According to the method for segmenting the object area, distance information of the objects and hiding relationships between the objects reflected in the disparity map are considered, and the information of far objects is used as a cut standard of the segmentation; therefore, the objects that are connected together or close to each other can be segmented, an accurate segmentation can be realized, and a good anti-noise capability can be realized. Furthermore, according to the present invention, the partially hidden objects can also be segmented well by processing near objects.

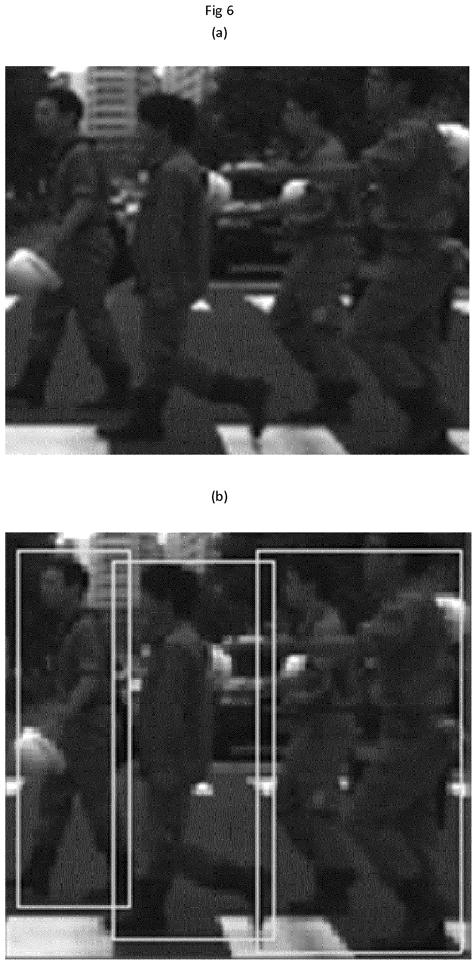

FIGs. 6(a) and 6(b) are schematic drawings illustrating a result of object area segmentation obtained by the above method of segmenting the object area. FIG. 6(a) illustrates a candidate object area including several adjacent or connected pedestrians; FIG. 6(b) is an object area segmentation result obtained by segmenting the candidate object area of FIG. 6(a) according to the above method for segmenting the object area, where several irregular bar-shape areas are examples of the above object segmentation areas. As illustrated in FIG. 6(b), the connected people are segmented accurately.

<2.4. Further optimization of segmentation result>

A further optimization of the segmentation result according to the above method may be performed based on the following fact. In most cases, objects rarely fly in the sky, therefore it is necessary to segment the object area from the road surface in cases where far objects fly in the sky. With respect to the segmentation result obtained by the above method for segmenting the object area according to the present invention, if the segmented object area looks like an object where the upper part is separated but the lower parts are still connected, it may be necessary to further segment the object area.

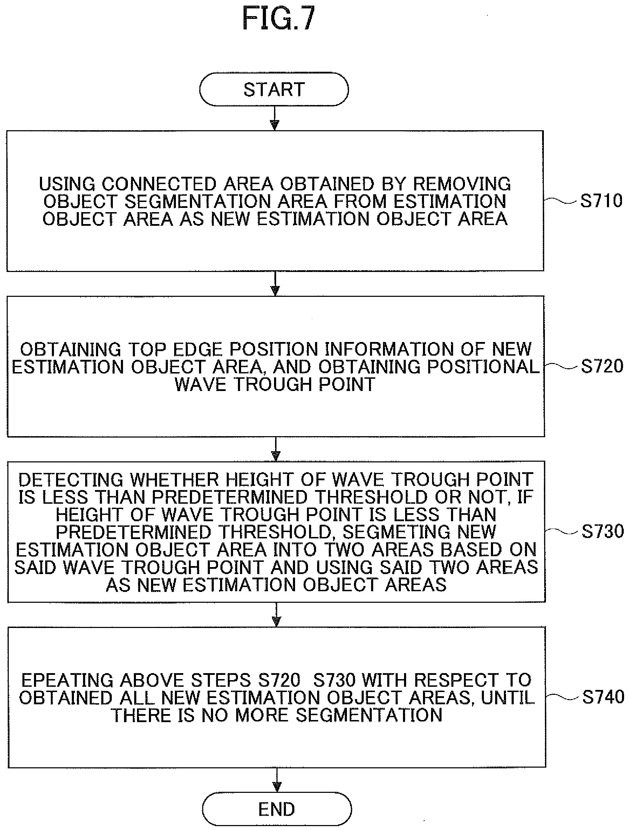

FIG. 7 is a flowchart illustrating a method of further optimizing the result of segmentation according to the embodiment of the present invention.

As illustrated in FIG. 7, in step S710, a connected area obtained by removing the object segmentation area from the estimation object area is used as a new estimation object area.

In step S720, top edge position information of the new estimation object area is obtained, and a positional wave trough point is obtained.

In step S730, it is detected whether the height of the wave trough point is less than a predetermined threshold or not. If the height is less than the predetermined threshold, the new estimation object area is segmented into two areas based on the wave trough point and the two areas are used as new estimation object areas.

In step S740, with respect to the obtained all new estimation object areas, the above steps S720 and S730 are repeated until there is no more segmentation.

The predetermined threshold may be set as it is needed; it may be an absolute threshold, for example, a fixed value which is predetermined. Alternatively, the threshold may be a relative threshold computed based on the top edge position value, for example, $a \times Mean(OUB)$, where a may be a coefficient factor between 0 and 1, Mean() represents calculating the mean, and OUB represents the above top edge position height value. Obviously, the threshold may be another appropriate value.

According to the above, a further segmentation of an object area including partially connected objects can be performed.

<2.5. Object segmenting apparatus>

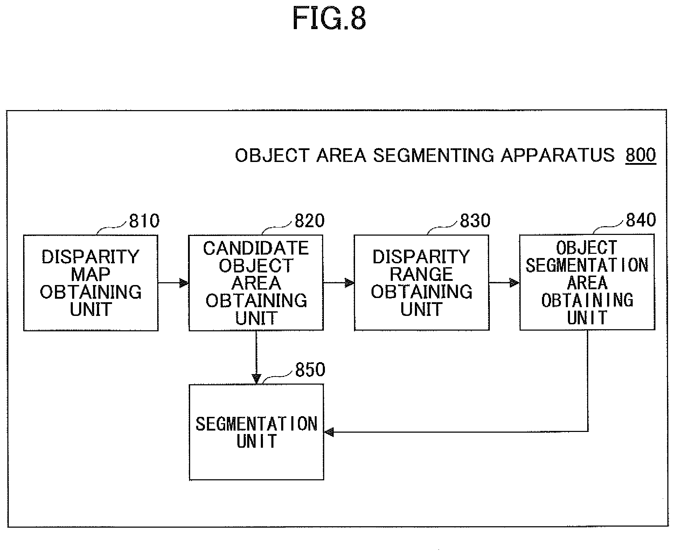

FIG. 8 is a block diagram illustrating an object area segmenting apparatus 800 according to the embodiment of the present invention.

As illustrated in FIG. 8, the object area segmenting apparatus 800 may comprise a disparity map obtaining unit 810, a candidate object area obtaining unit 820, a disparity range obtaining unit 830, an object segmentation area obtaining unit 840 and a segmentation unit 850.

The disparity map obtaining unit 810 obtains a disparity map of a scene with an object. The candidate object area obtaining unit 820 obtains one or more candidate object areas with an object outline from the disparity map. The disparity range obtaining unit 830 obtains a disparity range of the object within each of the candidate object areas. The object segmentation area obtaining unit 840 obtains object segmentation areas for segmenting the objects within each of the candidate object areas, based on points within the candidate object area that have a disparity value less than a minimum value of the disparity range of the object within the candidate object area. The segmentation unit 850 segments the candidate object areas by the object segmentation areas and obtains a segmentation result of the object area.

The object segmentation area obtaining unit 840 may use an area consisting of the points within each candidate object area that have the disparity value less than the minimum value of the disparity range of the object within the candidate object area as the object segmentation area.

<3. Summary>

As described above, the method and the apparatus for segmenting the object area is provided. The method for segmenting the object area comprises: a step of obtaining a disparity map of a scene with an object; a step of obtaining one or more candidate object areas with an object outline from the disparity map; a step of obtaining a disparity range of the object within each of the candidate object areas; a step of obtaining object segmentation areas for segmenting the objects within each of the candidate object areas, based on points within the candidate object area that have a disparity value less than a minimum value of the disparity range of the object within the candidate object area; and a step of segmenting the candidate object areas by the object segmentation areas and obtaining a segmentation result of the object area.

According to the method for segmenting the object area, distance information of the objects and hiding relationships between the objects reflected in the disparity map are considered, and the information of far objects is used as a cut standard of the segmentation; therefore, the objects that are connected together or close to each other can be segmented, an accurate segmentation can be realized, and a good anti-noise capability can be realized. Furthermore, according to the present invention, the partially hidden objects can also be segmented well by processing near objects.

Taking a road image as an example, the method and the apparatus for segmenting the object area according to the present invention is described in the above embodiment. However, it should be noted that the present invention can also be applied in other environments such as the office environment.

The disparity map of the scene with the object may be obtained by picking-up by a binocular camera, a multi-camera, or a stereoscope camera. Or the disparity map may be obtained from a depth map that is obtained from a stereo image. The method of obtaining the disparity map of the scene is known in prior art.

One or more candidate object areas may be obtained by an existing method for segmentation. Alternatively, one or more candidate object areas may be specified from the disparity map by a user, and the object area information and the object disparity range of each area may be obtained by an existing technology method.

An area consisting of the points within the candidate object area that have the disparity value less than the minimum value of the disparity range of the object within the candidate object area may be used as the object segmentation area. Alternatively, if the points within the candidate object area that do not have a disparity value are adjacent to the point within the object segmentation area in vertical direction, the points are also put into the object segmentation area. Alternatively, if the points within the candidate object area that have a disparity value greater than a maximum value of the disparity range of the object are adjacent to the point within the object segmentation area in vertical direction, the points are also put into the object segmentation area.

An area consisting of points within the candidate object area that have a disparity value within the disparity range may be used as the estimation object area. Alternatively, if the points within the candidate object area that do not have a disparity value are adjacent to the point within the estimation object area, the points are also put into the estimation object area. Alternatively, if the points within the candidate object area that have a disparity value greater than a maximum value of the disparity range of the object are adjacent to the point within the estimation object area, the points are also put into the estimation object area.

The basic principle of the present invention is described above with reference to the embodiment. Any one or all of the steps or units of the method or apparatus according to the present invention may be implemented by hardware, software or their combinations in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performing sequence is not limited to the time order. Any steps may be performed in parallel or independently.

The present invention is not limited to the specifically disclosed embodiments, and variations and modifications may be made without departing from the scope of the present invention.

The present application is based on Chinese Priority Application No.201210147434.5 filed on May 11, 2012.

**Claims**

1. A method for segmenting an object area, comprising:

   obtaining a disparity map of a scene with objects;
   obtaining one or more candidate object areas with predetermined circumscribed shapes, the candidate object areas including the objects in the disparity map;
   obtaining a disparity range of a predetermined number of points within each of the candidate object areas;
   obtaining object segmentation areas within the candidate object areas, each object segmentation area consisting of points that have a disparity less than the disparity range of the object within the candidate object area; and
   segmenting each candidate object area into an estimation object area consisting of points that have a disparity within the disparity range and the object segmentation area consisting of points that have a disparity less than the disparity range, as different object areas.

2. The method for segmenting an object area according to claim 1, wherein the step of obtaining the object segmentation areas further comprises:

   detecting whether the points within the candidate object area that do not have a disparity value are adjacent to a point within the object segmentation area in vertical direction or not, and putting the points into the object segmentation area if the points are adjacent to the point within the object segmentation area; and
   detecting whether the points within the candidate object area that have a disparity value greater than a maximum value of the disparity range of the object are adjacent to a point within the object segmentation area in vertical direction or not, and putting the points into the object segmentation area if the points are adjacent to the point within the object segmentation area.

3. The method for segmenting an object area according to claim 1, wherein the step of obtaining the estimation object area comprises:

detecting whether points within the candidate object area that do not have a disparity value are adjacent to a point within the estimation object area or not, and putting the points into the estimation object area if the points are adjacent to the point within the estimation object area; and

detecting whether points within the candidate object area that have a disparity value greater than the maximum value of the disparity range of the object are adjacent to a point within the estimation object area or not, and putting the points into the estimation object area if the points are adjacent to the point within the estimation object area.

4. The method for segmenting an object area according to claim 1, wherein the step of segmenting each candidate object area comprises:

(a) using a connected area, obtained by removing the object segmentation area from the estimation object area, as a new estimation object area;

(b) obtaining the top edge position of the new estimation object area;

(c) detecting whether the height of the top edge position is less than a predetermined threshold or not, and if the height is less than the predetermined threshold, segmenting the new estimation object area into two areas based on the top edge position and using the two areas as new estimation object areas; and

(d) repeating the above steps (b) and (c) with respect to the obtained all new estimation object areas, until there is no more segmentation.

5. The method for segmenting an object area according to claim 4, wherein the predetermined threshold is an absolute threshold or a relative threshold computed from the top edge position.

6. An apparatus for segmenting an object area, comprising:

a disparity map obtaining unit configured to obtain a disparity map of a scene with objects;

a candidate object area obtaining unit configured to obtain one or more candidate object areas with predetermined circumscribed shapes, the candidate object areas including the objects in the disparity map;

a disparity range obtaining unit configured to obtain a disparity range of a predetermined number of points within each of the candidate object areas;

an object segmentation area obtaining unit configured to obtain object segmentation areas within the candidate object areas, each object segmentation area consisting of points that have a disparity less than the disparity range of the object within the candidate object area; and

a segmentation unit configured to segment each candidate object area into an estimation object area consisting of points that have a disparity within the disparity range and the object segment area consisting of points that have a disparity less than the disparity range, as different object areas.

**Patentansprüche**

1. Verfahren zum Segmentieren eines Objektbereichs, das Folgendes umfasst:

Erhalten einer Disparitätskarte einer Szene mit Objekten;

Erhalten eines oder mehrerer Objektbereichskandidaten mit vorbestimmten umschriebenen Formen, wobei die Objektbereichskandidaten die Objekte in der Disparitätskarte beinhalten;

Erhalten einer Disparitätsspanne einer vorbestimmten Anzahl von Punkten innerhalb jedes der Objektbereichskandidaten;

Erhalten von Objektsegmentierungsbereichen innerhalb der Objektbereichskandidaten, wobei jeder Objektsegmentierungsbereich aus Punkten besteht, die eine Disparität aufweisen, die geringer ist als die Disparitätsspanne des Objekts innerhalb des Objektbereichskandidaten; und

Segmentieren jedes Objektbereichskandidaten in einen Objektschätzbereich, der aus Punkten besteht, die eine Disparität innerhalb der Disparitätsspanne aufweisen, und den Objektsegmentierungsbereich, der aus Punkten besteht, die eine Disparität aufweisen, die geringer ist als die Disparitätsspanne, als andere Objektbereiche.

**2.** Verfahren zum Segmentieren eines Objektbereichs nach Anspruch 1, wobei der Schritt des Erhaltens der Objektsegmentierungsbereiche ferner Folgendes umfasst:

Detektieren, ob die Punkte innerhalb des Objektbereichskandidaten, die keinen Disparitätswert aufweisen, einem Punkt innerhalb des Objektsegmentierungsbereichs in vertikaler Richtung benachbart sind oder nicht, und Einfügen der Punkte in den Objektsegmentierungsbereich, wenn die Punkte dem Punkt innerhalb des Objektsegmentierungsbereichs benachbart sind; und

Detektieren, ob die Punkte innerhalb des Objektbereichskandidaten, die einen Disparitätswert aufweisen, der größer ist als ein maximaler Wert der Disparitätsspanne des Objekts, einem Punkt innerhalb des Objektsegmentierungsbereichs in vertikaler Richtung benachbart sind oder nicht, und Einfügen der Punkte in den Objektsegmentierungsbereich, wenn die Punkte dem Punkt innerhalb des Objektsegmentierungsbereichs benachbart sind.

**3.** Verfahren zum Segmentieren eines Objektbereichs nach Anspruch 1, wobei der Schritt des Erhaltens des Objektschätzbereichs Folgendes umfasst:

Detektieren, ob Punkte innerhalb des Objektzbereichskandidaten, die keinen Disparitätswert aufweisen, einem Punkt innerhalb des Objektschätzbereichs benachbart sind oder nicht, und Einfügen der Punkte in den Objektschätzbereich, wenn die Punkte dem Punkt innerhalb des Objektschätzbereichs benachbart sind; und

Detektieren, ob Punkte innerhalb des Objektbereichskandidaten, die einen Disparitätswert aufweisen, der größer ist als der maximale Wert der Disparitätsspanne des Objekts, einem Punkt innerhalb des Objektschätzbereichs benachbart sind oder nicht, und Einfügen der Punkte in den Objektschätzbereich, wenn die Punkte dem Punkt innerhalb des Objektschätzbereichs benachbart sind.

**4.** Verfahren zum Segmentieren eines Objektbereichs nach Anspruch 1, wobei der Schritt des Segmentierens jedes Objektbereichskandidaten Folgendes umfasst:

(a) Verwenden eines verbundenen Bereichs, der durch Entfernen des Objektsegmentierungsbereichs aus dem Objektschätzbereich erhalten wird, als neuen Objektschätzbereich;

(b) Erhalten der oberen Randposition des neuen Objektschätzbereichs;

(c) Detektieren, ob die Höhe der oberen Randposition geringer ist als ein vorbestimmter Schwellwert oder nicht, und wenn die Höhe geringer ist als der vorbestimmte Schwellwert, Segmentieren des neuen Objektschätzbereichs in zwei Bereiche auf Basis der oberen Randposition und unter Verwendung der zwei Bereiche als neue Objektschätzbereiche; und

(d) Wiederholen der vorstehenden Schritte (b) und (c) mit Bezug auf die erhaltenen völlig neuen Objektschätzbereiche, bis keine Segmentierung mehr vorhanden ist.

**5.** Verfahren zum Segmentieren eines Objektbereichs nach Anspruch 4, wobei der vorbestimmte Schwellwert ein absoluter Schwellwert oder ein relativer Schwellwert ist, der aus der oberen Randposition berechnet wird.

**6.** Vorrichtung zum Segmentieren eines Objektbereichs, die Folgendes umfasst:

eine Einheit zum Erhalten einer Disparitätskarte, die dazu ausgelegt ist, eine Disparitätskarte einer Szene mit Objekten zu erhalten;

eine Einheit zum Erhalten von Objektbereichskandidaten, die dazu ausgelegt ist, einen oder mehrere Objektbereichskandidaten mit vorbestimmten umschriebenen Formen zu erhalten, wobei die Objektbereichskandidaten die Objekte in der Disparitätskarte beinhalten;

eine Einheit zum Erhalten einer Disparitätsspanne, die dazu ausgelegt ist, eine Disparitätsspanne einer vorbestimmten Anzahl von Punkten innerhalb jedes der Objektbereichskandidaten zu erhalten;

eine Einheit zum Erhalten eines Objektsegmentierungsbereichs, die dazu ausgelegt ist, Objektsegmentierungsbereiche innerhalb der Objektbereichskandidaten zu erhalten, wobei jeder Objektsegmentierungsbereich aus Punkten besteht, die eine Disparität aufweisen, die geringer ist als die Disparitätsspanne des Objekts innerhalb des Objektbereichskandidaten; und

eine Segmentierungseinheit, die dazu ausgelegt ist, jeden Objektbereichskandidaten in einen Objektschätzbereich, der aus Punkten besteht, die eine Disparität innerhalb der Disparitätsspanne aufweisen, und den Objektsegmentbereich, der aus Punkten besteht, die eine Disparität aufweisen, die geringer ist als die Disparitätsspanne, als andere Objektbereiche zu segmentieren.

**Revendications**

1. Procédé de segmentation d'une zone d'objet, comprenant les étapes consistant à :

   obtenir une carte de disparité d'une scène comportant des objets ;
   obtenir une ou plusieurs zone(s) d'objet candidates présentant des formes circonscrites prédéterminées, les zones d'objet candidates comprenant les objets de la carte de disparité ;
   obtenir une plage de disparité d'un nombre prédéterminé de points situés à l'intérieur des zones d'objet candidates respectives ;
   obtenir des zones de segmentation d'objet à l'intérieur des zones d'objet candidates, chaque zone de segmentation d'objet étant constituée de points qui présentent une disparité inférieure à la plage de disparité de l'objet à l'intérieur de la zone d'objet candidate ; et
   segmenter chaque zone d'objet candidate pour donner une zone d'objet d'estimation constituée de points qui présentent une disparité comprise dans la plage de disparité et la zone de segmentation d'objet constituée de points qui présentent une disparité inférieure à la plage de disparité, sous la forme de zones d'objet différentes.

2. Procédé de segmentation d'une zone d'objet selon la revendication 1, dans lequel l'étape d'obtention des zones de segmentation d'objet comprend en outre les étapes consistant à :

   détecter si les points situés à l'intérieur de la zone d'objet candidate et qui ne présentent pas une valeur de disparité sont adjacents ou non à un point situé à l'intérieur de la zone de segmentation d'objet dans la direction verticale, et placer les points dans la zone de segmentation d'objet si les points sont adjacents au point situé à l'intérieur de la zone de segmentation d'objet ; et
   détecter si les points situés à l'intérieur de la zone d'objet candidate et qui présentent une valeur de disparité supérieure à une valeur maximale de la plage de disparité de l'objet sont adjacents ou non à un point situé à l'intérieur de la zone de segmentation d'objet dans la direction verticale, et placer les points dans la zone de segmentation d'objet si les points sont adjacents au point situé à l'intérieur de la zone de segmentation d'objet.

3. Procédé de segmentation d'une zone d'objet selon la revendication 1, dans lequel l'étape d'obtention de la zone d'objet d'estimation comprend les étapes consistant à :

   détecter si les points situés à l'intérieur de la zone d'objet candidate et qui ne présentent pas une valeur de disparité sont adjacents ou non à un point situé à l'intérieur de la zone d'objet d'estimation, et placer les points dans la zone d'objet d'estimation si les points sont adjacents au point situé à l'intérieur de la zone d'objet d'estimation ; et
   détecter si les points situés à l'intérieur de la zone d'objet candidate et qui présentent une valeur de disparité supérieure à la valeur maximale de la plage de disparité de l'objet sont adjacents ou non à un point situé à l'intérieur de la zone d'objet d'estimation, et placer les points dans la zone d'objet d'estimation si les points sont adjacents au point situé à l'intérieur de la zone d'objet d'estimation.

4. Procédé de segmentation d'une zone d'objet selon la revendication 1, dans lequel l'étape de segmentation de chaque zone d'objet candidate comprend les étapes consistant à :

   (a) utiliser une zone connectée, obtenue par retrait de la zone de segmentation d'objet par rapport à la zone d'objet d'estimation, sous la forme d'une nouvelle zone d'objet d'estimation ;
   (b) obtenir la position de bord supérieur de la nouvelle zone d'objet d'estimation ;
   (c) détecter si la hauteur de la position de bord supérieur est inférieure ou non à un seuil prédéterminé, et, si la hauteur est inférieure au seuil prédéterminé, segmenter la nouvelle zone d'objet d'estimation pour donner deux zones en se basant sur la position de bord supérieur, et utiliser les deux zones en tant que nouvelles zones d'objet d'estimation ; et
   (d) répéter les étapes (b) et (c) ci-dessus en prenant en compte les toutes nouvelles zones d'objet d'estimation obtenues, jusqu'à ce qu'il n'y ait plus de segmentation.

5. Procédé de segmentation d'une zone d'objet selon la revendication 4, dans lequel le seuil prédéterminé est un seuil absolu ou un seuil relatif calculé à partir de la position de bord supérieur.

6. Appareil permettant de segmenter une zone d'objet, comprenant :

une unité d'obtention de carte de disparité configurée pour obtenir une carte de disparité d'une scène comportant des objets ;

une unité d'obtention de zones d'objet candidates configurée pour obtenir une ou plusieurs zone(s) d'objet candidates présentant des formes circonscrites prédéterminées, les zones d'objet candidates comprenant les objets dans la carte de disparité ;

une unité d'obtention de plage de disparité configurée pour obtenir une plage de disparité d'un nombre prédéterminé de points situés à l'intérieur de chacune des zones d'objet candidates;

une unité d'obtention de zone de segmentation d'objet configurée pour obtenir des zones de segmentation d'objet à l'intérieur des zones d'objet candidates, chaque zone de segmentation d'objet étant constituée de points qui présentent une disparité inférieure à la plage de disparité de l'objet à l'intérieur de la zone d'objet candidate ; et

une unité de segmentation configurée pour segmenter chaque zone d'objet candidate pour donner une zone d'objet d'estimation constituée de points qui présentent une disparité comprise dans la plage de disparité et la zone de segmentation d'objet constituée de points qui présentent une disparité inférieure à la plage de disparité, sous la forme de zones d'objet différentes.

Fig 1

(a)

(b)

# FIG.2

START

OBTAINING DISPARITY MAP OF SCENE WITH OBJECT ⎯ S210

OBTAINING ONE OR MORE CANDIDATE OBJECT AREAS WITH OBJECT OUTLINE FROM DISPARITY MAP ⎯ S220

OBTAINING DISPARITY RANGE OF TARGET OBJECT WITHIN EACH CANDIDATE OBJECT AREA ⎯ S230

OBTAINING OBJECT SEGMENTATION AREAS FOR SEGMENTING OBJECTS WITHIN EACH CANDIDATE OBJECT AREA, BASED ON POINTS WITHIN CANDIDATE OBJECT AREA THAT HAVE DISPARITY VALUE LESS THAN MINIMUM VALUE OF DISPARITY RANGE OF OBJECT WITHIN SAID CANDIDATE OBJECT AREA ⎯ S240

SEGMENTING CANDIDATE OBJECT AREAS BY OBJECT SEGMENTATION AREAS, AND OBTAINING SEGMENTATION RESULT OF OBJECT AREA ⎯ S250

END

# FIG.3

START

USING AREA CONSISTING OF POINTS WITHIN EACH
CANDIDATE OBJECT AREA THAT HAVE DISPARITY
VALUE LESS THAN MINIMUM VALUE OF DISPARITY
RANGE OF OBJECT WITHIN SAID CANDIDATE OBJECT
AREA AS OBJECT SEGMENTATION AREA

~S310

DETECTING WHETHER POINTS WITHIN CANDIDATE
OBJECT AREA THAT DO NOT HAVE DISPARITY VALUE
ARE ADJACENT TO POINT WITHIN OBJECT
SEGMENTATION AREA IN VERTICAL DIRECTION OR NOT,
AND PUTTING SAID POINTS INTO SAID OBJECT
SEGMENTATION AREA IF SAID POINTS ARE ADJACENT
TO POINT WITHIN SAID OBJECT SEGMENTATION AREA

~S320

DETECTING WHETHER POINTS WITHIN CANDIDATE
OBJECT AREA THAT HAVE DISPARITY VALUE GREATER
THAN MAXIMUM VALUE OF DISPARITY RANGE OF
OBJECT ARE ADJACENT TO POINT WITHIN OBJECT
SEGMENTATION AREA IN VERTICAL DIRECTION OR NOT,
AND PUTTING SAID POINTS INTO SAID OBJECT
SEGMENTATION AREA IF SAID POINTS ARE ADJACENT
TO POINT WITHIN SAID OBJECT SEGMENTATION AREA

~S330

END

# FIG.4

```
START
```

OBTAINING ESTIMATION OBJECT AREA WITHIN
CANDIDATE OBJECT AREA, BASED ON POINTS WITHIN
SAID CANDIDATE OBJECT AREA THAT HAVE DISPARITY ⸏ S410
VALUE WITHIN DISPARITY RANGE OF TARGET OBJECT
WITHIN SAID CANDIDATE OBJECT AREA

SEGMENTING ESTIMATION OBJECT AREA BY OBTAINED ⸏ S420
OBJECT SEGMENTATION AREA

```
END
```

# FIG.5

START

USING AREA CONSISTING OF POINTS WITHIN CANDIDATE
OBJECT AREA THAT HAVE DISPARITY VALUE WITHIN
DISPARITY RANGE OF TARGET OBJECT WITHIN SAID
CANDIDATE OBJECT AREA AS ESTIMATION OBJECT AREA

S510

DETECTING WHETHER POINTS WITHIN CANDIDATE
OBJECT AREA THAT DO NOT HAVE DISPARITY VALUE
ARE ADJACENT TO POINT WITHIN ESTIMATION OBJECT
AREA OR NOT, AND PUTTING SAID POINTS INTO SAID
ESTIMATION OBJECT AREA IF SAID POINTS ARE
ADJACENT TO POINT WITHIN SAID OBJECT
SEGMENTATION AREA

S520

DETECTING WHETHER POINTS WITHIN CANDIDATE OBJECT
AREA THAT HAVE DISPARITY VALUE GREATER THAN MAXIMUM
VALUE OF DISPARITY RANGE OF OBJECT ARE ADJACENT TO
POINT WITHIN ESTIMATION OBJECT AREA OR NOT, AND
PUTTING SAID POINTS INTO SAID ESTIMATION OBJECT AREA
IF SAID POINTS ARE ADJACENT TO POINT WITHIN SAID
ESTIMATION OBJECT AREA

S530

END

Fig 6

(a)

(b)

# FIG.7

```
┌─────────────┐
│    START    │
└─────────────┘
       │
       ▼
┌─────────────────────────────────────────────┐
│  USING CONNECTED AREA OBTAINED BY REMOVING   │
│  OBJECT SEGMENTATION AREA FROM ESTIMATION    │─── S710
│  OBJECT AREA AS NEW ESTIMATION OBJECT AREA   │
└─────────────────────────────────────────────┘
       │
       ▼
┌─────────────────────────────────────────────┐
│  OBTAINING TOP EDGE POSITION INFORMATION OF  │
│  NEW ESTIMATION OBJECT AREA, AND OBTAINING   │─── S720
│  POSITIONAL WAVE TROUGH POINT                │
└─────────────────────────────────────────────┘
       │
       ▼
┌─────────────────────────────────────────────┐
│  DETECTING WHETHER HEIGHT OF WAVE TROUGH     │
│  POINT IS LESS THAN PREDETERMINED THRESHOLD  │
│  OR NOT, IF HEIGHT OF WAVE TROUGH POINT IS   │
│  LESS THAN PREDETERMINED THRESHOLD,          │─── S730
│  SEGMETING NEW ESTIMATION OBJECT AREA INTO   │
│  TWO AREAS BASED ON SAID WAVE TROUGH POINT   │
│  AND USING SAID TWO AREAS AS NEW ESTIMATION  │
│  OBJECT AREAS                                │
└─────────────────────────────────────────────┘
       │
       ▼
┌─────────────────────────────────────────────┐
│  EPEATING ABOVE STEPS S720 S730 WITH RESPECT │
│  TO OBTAINED ALL NEW ESTIMATION OBJECT       │─── S740
│  AREAS, UNTIL THERE IS NO MORE SEGMENTATION  │
└─────────────────────────────────────────────┘
       │
       ▼
┌─────────────┐
│     END     │
└─────────────┘
```

# FIG.8

OBJECT AREA SEGMENTING APPARATUS 800

```
810                    820                    830                    840
DISPARITY          CANDIDATE          DISPARITY            OBJECT
MAP                OBJECT             RANGE                SEGMENTATION
OBTAINING          AREA               OBTAINING            AREA
UNIT               OBTAINING          UNIT                 OBTAINING
                   UNIT                                    UNIT
```

```
850
SEGMENTATION
UNIT
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7046822 B
- WO 2009013636 A2

- CN 201210147434

### Non-patent literature cited in the description

- A layered stereo algorithm using image segmentation and global visibility constraints. **BLEYER M et al.** IMAGE PROCESSING, 2004. ICIP '04. 2004 INTERNATIONAL CONFERENCE ON SINGAPORE 24-27 OCT.2004. IEEE, 24 October 2004, vol. 5, 2997-3000

- **YINGPING HUANG et al.** Stereovision-Based Object Segmentation for Automotive Applications. *EURASIP Journal on Applied Signal Processing,* 2005, vol. 14, 2322-2329